# EUROPEAN PATENT SPECIFICATION

(11) **EP 3 820 091 B1**
(45) Date of publication and mention of the grant of the patent: **26.04.2023**
(21) Application number: 19208093.5
(22) Date of filing: 08.11.2019
(51) Int. Cl.: H04W 28/02, H04L 47/20, H04W 8/04

(54) **COMMUNICATION SYSTEM AND METHOD FOR OPERATING A COMMUNICATION SYSTEM**
KOMMUNIKATIONSSYSTEM UND VERFAHREN ZUM BETRIEB EINES KOMMUNIKATIONSSYSTEMS
SYSTÈME DE COMMUNICATION ET PROCÉDÉ DE FONCTIONNEMENT D'UN SYSTÈME DE COMMUNICATION

(43) Date of publication of application: 12.05.2021
(73) Proprietor: NTT DOCOMO, INC., Chiyoda-ku Tokyo 100-6150 (JP)
(72) Inventor: THAKOLSRI, Srisakul, 80687 Munich (DE); SAMA, Malla Reddy, 80687 Munich (DE)
(74) Representative: Viering, Jentschura & Partner mbB Patent- und Rechtsanwälte

(56) References cited:
- WO-A1-2019/032968
- US-A1- 2017 332 421
- US-A1- 2019 075 552
- US-A1- 2019 335 366
- ZTE CORPORATION: "AMBR enforcement", 3GPP DRAFT; S2-165806 - AMBR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Kaohsiung city, Taiwan; 20161017 - 20161021 16 October 2016 (2016-10-16), XP051155388, Retrieved from the Internet: URL:http://www.3gpp.org/ftp/Meetings_3GPP_ SYNC/SA2/Docs/ [retrieved on 2016-10-16]

## Description

The present disclosure relates to a communication system and a method for operating a communication system.

In a communication network such as a 5G mobile radio communication network it may be desirable to introduce and implement limitations or quota with respect to the data rate in uplink and downlink of a certain network slice on a per User Equipment (UE) basis, i.e. the maximum data rate used by sessions provided by the network slice for a single UE.

ZTE CORPORATION: "AMBR enforcement",3GPP DRAFT; S2-165806 - AMBR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. SA WG2, no. Kaohsiung city, Taiwan; 20161017 - 20161021 16 October 2016 (2016-10-16) discusses AMBR enforcement.

US 2019335366 A1 describes allocating a network slice in a 5G RAN via messages exchanged between a central unit, CU and one or more distributed units, DUs. The CU obtains a UE aggregated maximum bit rate, AMBR and coordinates based on current resource use status the AMBR value provided to a DU1 and DU2 in a dual connectivity case.

US 2019075552 A1 discloses a network slice setup procedure in a 5G RAN with control/user plane separation entities. A maximum processing rate is assigned to a network slice in a message sent by the central unit, CU - CP to one or more associated CU - UP entities when establishing the slice. The slice resources are allocated by the CU-CP based on obtained resource availability information.

According to one embodiment of the claimed invention, a communication system is provided, as defined by appended claim 1.According to one embodiment of the claimed invention, a method for operating a communication system is provided, as defined by appended claim 14.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, for example configured according to 5G (Fifth Generation) as specified by 3GPP (Third Generation Partnership Project).
- Figure 2: illustrates the definition of rate limits for a UE.
- Figure 3: shows a flow diagram illustrating the propagation of AMBR information (in particular UE-Slice-AMBR information) in 5GS (5G communication system) during UE registration and PDU Session establishment.
- Figure 4: shows a flow diagram illustrating the propagation of AMBR information (in particular UE-Slice-AMBR information) in 5GS (5G communication system) during UE registration and PDU Session establishment.
- Figure 5: illustrates a NEST (Network Slice Type) for a network slice having a first network slice instance and a second network slice instance.
- Figure 6: shows a communication system according to a claimed embodiment.
- Figure 7: shows a flow diagram illustrating a method for operating a communication system, according to a claimed embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

According to further non-claimed embodiments, a computer program and a computer readable medium including instructions, which, when executed by a computer, make the computer perform the method of appended claim 14.

In the following, various examples will be described in more detail.

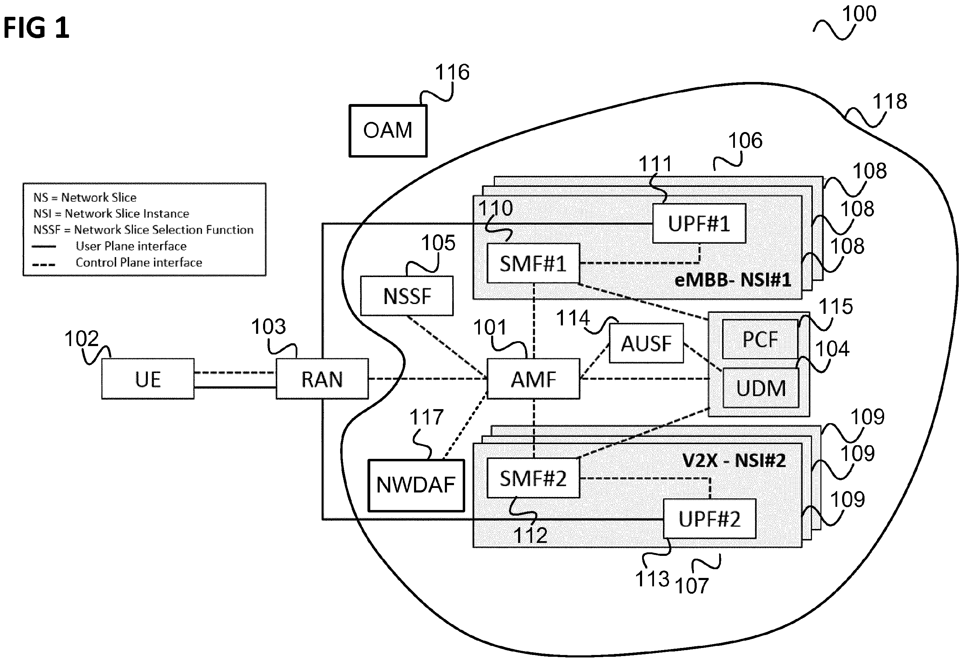

Figure 1 shows a radio communication system 100, for example configured according to 5G (Fifth Generation) as specified by 3GPP (Third Generation Partnership Project). The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network (5GC) 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator (also referred to MNO for Mobile Network Operator) may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

An S-NSSAI (Single Network Slice Selection Assistance information) identifies a network slice and is included of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The core network 118 may further include a Network Data Analytics Function (NWDAF) 117. The NWDAF is responsible for providing network analysis information upon request from network functions. For example, a network function may request specific analysis information on the load level of a particular network slice. Alternatively, the network function can use the subscribe service to ensure that it is notified by the NWDAF if the load level of a network slice changes or reaches a specific threshold. The NWDAF 117 may have an interface to various network functions on the mobile radio communication network side, e.g. to the AMF 101, the SMFs 110, 112 and the PCF 115. For simplicity, only the interface between the NWDAF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

According to various embodiment, in a 5G radio communication system like the radio communication system 100, network slice related quota are defined. This means that for example the data rate provided by a network slice 106, 107, i.e. the total data rate of all PDU sessions for a single UE being served in a network is limited.

For example, the GST (Generic Network Slice Template) for a network slice 106, 107 may have an attribute "Maximum downlink throughput" which describes the maximum data rate supported by the network slice 106, 107 per UE 102 in downlink. These parameters could be used to offer different contract qualities like gold, silver and bronze. An example is given in table 1.

**Table 1**

| Parameters | |
|---|---|
| Value | Integer |
| Measurement unit | kpbs |
| Example | Bronze: 50.000 kbps |
| | Silver: 400.000 kbps |
| | Gold: 1.000.000 kbps |
| Tags | Character attribute/Performance KPI (key performance identicator) |

Similarly, the GST (Generic Network Slice Template) for a network slice 106, 107 may have (possibly in addition to the "Maximum downlink throughput") an attribute "Maximum uplink throughput" which describes the maximum data rate supported by the network slice 106, 107 per UE 102 in uplink. These parameters could be used in order to offer different contract qualities like gold, silver and bronze. An example may be similar to the one of table 1 for the downlink case.

It should be noted that GSMA (GSM Association) has defined a Generic Slice Template (GST) to provide standardised list of attributes to characterise network slice type.

In the following, embodiments are described which allow implementing maximum data rates (also referred to as throughputs) per network slice as the ones given above. In particular, they relate to the limitation of the data rate of UEs (i.e. provided for UEs) for a network slice, ensuring that the aggregate of the PDU sessions that use the slice are rate limited to the rate defined for the network slice in DL and UL. This includes ways to signal the rate limits (e.g. propagating such rate limitation per slice per UE to the RAN) and a possible impact on subscription data.

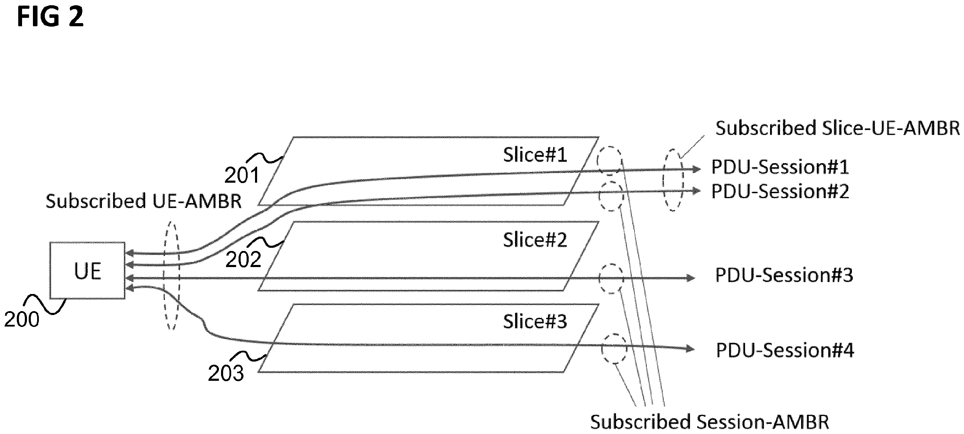

Figure 2 illustrates the definition of rate limits for a UE 201.

The UE 200 for example corresponds to the UE 107. It is illustrated as using three network slices 201, 202, 203.

The UDM 104 stores subscription data for the UE 200. According to various embodiments, this subscription data includes Subscribed UE-AMBR, Subscribed Session-AMBR and Subscribed Slice-UE-AMBR (wherein AMBR stands for "aggregate maximum bit rate").

The Subscribed UE-AMBR is the maximum aggregated uplink and downlink MBRs (maximum bit rates) to be shared across all Non-GBR (Guaranteed) QoS (Quality of Service) Flows according to the subscription of the user (of UE 102).

The Subscribed Session-AMBR is the maximum aggregated uplink and downlink MBRs to be shared across all Non-GBR QoS flows in each PDU Session, which is established for a respective DNN (data network name) and S-NSSAI (i.e. network slice 201, 202, 203).

The Subscribed Slice-UE-AMBR is the Maximum Aggregated uplink and downlink MBRs to be shared across all Non-GBR QoS Flows for all PDU Sessions, which are each established for a respective DNN and S-NSSAI.

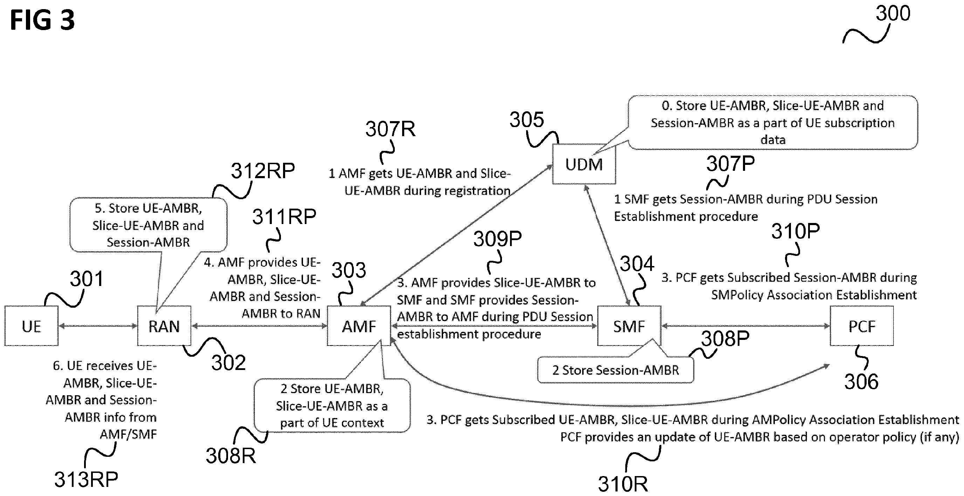

Figure 3 shows a flow diagram 300 illustrating the propagation of AMBR information (in particular UE-Slice-AMBR information) in 5GS (5G communication system) during UE registration and PDU Session establishment.

A UE 301, e.g. corresponding to UE 102, a RAN 302, e.g. corresponding to RAN 103, an AMF 303, e.g. corresponding to AMF 101, an SMF 304, e.g. corresponding to one of SMFs 110, 112, a UDM 305, e.g. corresponding to UDM 104, and a PCF 306, e.g. corresponding to PCF 115 are involved in the flow.

In figure 3, message exchanges or operations relating to registration are indicated with an 'R' and message exchanges or operations relating to PDU session establishment are indicated with a 'P'. Message exchanges or operations relating to both are indicated with 'RP'.

In the registration case (i.e. following a registration request by the UE 301), in 307R, the AMF 303 gets the UE-AMBR and the Slice-UE-AMBR during the registration process. The AMF 303 stores the UE-AMBR and the Slice-UE-AMBR as a part of the UE context in 308R.

In the PDU session establishment case (i.e. following a PDU session establishment request by the UE 301), in 307P, the AMF 303 gets the UE-AMBR and the Slice-UE-AMBR during the PDU session establishment procedure. The SMF 304 stores the Session-AMBR and/or Slice-UE-AMBR 308P as a part of session management context for the UE, for example.

In 309P, the AMF 303 may provide the Slice-UE-AMBR to the SMF 304 if the AMF has the Slice-UE-AMBR information available during the registration procedure, and the SMF 304 provides the Session-AMBR to the AMF 303 during PDU Session establishment procedure.

In 310R, the PCF 306 gets the Subscribed UE-AMBR and the Slice-UE-AMBR during AMPolicy Association Establishment. PCF may provide an update of UE-AMBR and even an update of Slice-UE-AMBR based on operator policy (if any).

In 310P, the PCF 306 gets the Subscribed Session-AMBR during SMPolicy Association Establishment.

In both the registration case and the PDU establishment case, the AMF 303 provides the UE-AMBR, the Slice-UE-AMBR and the Session-AMBR to the RAN in 311RP.

The RAN 302 stores the UE-AMBR, the Slice-UE-AMBR and the Session-AMBR in 312RP.

In 313RP, the UE 301 receives the UE-AMBR, the Slice-UE-AMBR and the Session-AMBR information (from the AMF 303 and the SMF 304, respectively).

It should be noted that although figure 3 shows that the AMF 303 propagates the Slice-UE-AMBR in the 5GS including RAN 302 and UE 301, this can also be done by the SMF 304, e.g., the SMF 304 retrieves such Slice-UE-AMBR from the UDM 305 and then propagates this further to the AMF 303, RAN 302, PCF 306 and UE 301.

It should further be noted that the Slice-UE-AMBR may also be communicated to the RAN (or generally a component configured to enforce the data rate quota) in a roaming scenario (e.g. in a Home-routed scenario). In such a case, the Home PLMN (H-PLMN) may communicate a data rate quota to the Visited (V-PLMN) of a mobile terminal. For example, the V-PLMN AMF retrieves a UE's subscription including the Slice-UE-AMBR from the H-PLMN UDM during the registration procedure. Alternatively, a H-PLMN SMF provides the Slice-UE-AMBR to the V-PLMN SMF in a Nsmf_PDUSession_Create Response message (i.e. in a response message to a PDU session establishment request).

Additionally, it should be noted that a Slice-UE-AMBR and/or Session-AMBR may be provided and/or updated by the DN-AAA (Data Network-Authentication, Authorization and Accounting) during the PDU Session establishment.

Further, the NRM (Network Resource Model) in an OAM (e.g. OAM 116) may be enhanced for AMF, SMF and RAN with an attribute for maximum data rate per slice per UE.

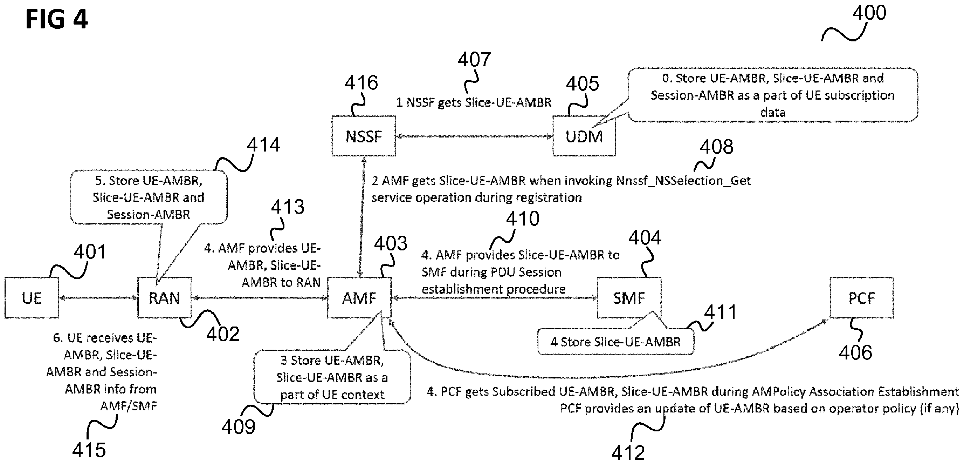

Figure 4 shows a flow diagram 400 illustrating the propagation of AMBR information (in particular UE-Slice-AMBR information) in 5GS (5G communication system) during UE registration and PDU Session establishment according to another embodiment.

Similarly to the embodiment of figure 4, a UE 401, e.g. corresponding to UE 102, a RAN 402, e.g. corresponding to RAN 103, an AMF 403, e.g. corresponding to AMF 101, an SMF 404, e.g. corresponding to one of SMFs 110, 112, a UDM 405, e.g. corresponding to UDM 104, and a PCF 406, e.g. corresponding to PCF 115 are involved in the flow.

However, in addition, an NSSF 416, e.g. corresponding to NSSF 105, is involved in the flow.

Instead of 307R and 307P, the NSSF 416 gets the Slice-UE-AMBR from the UDM 405 in 407.

In 408, the AMF 403 gets the Slice-UE-AMBR when invoking Nnssf_NSSelection_Get service operation during registration.

Then, 409, 410, 411, 412, 413, 414, 415 are performed similarly to 308R, 309P, 308P, 310R, 311RP, 312RP and 313RP, respectively.

A network slice (of a NEST) may have multiple network slice instances. In the following, approaches for handling aspects of having multiple network slice instances for a NEST a provided.

Based on an operator's operational or deployment needs, a Network Slice instance can be associated with one or more S-NSSAIs, and an S-NSSAI can be associated with one or more Network Slice instances. Multiple Network Slice instances associated with the same S-NSSAI may be deployed in the same or in different Tracking Areas.

A NEST (Network Slice Type) is applied to a Network Slice even when supported by multiple Network Slice instances That means, for example, if a "maximum number of terminals" is specified for a network slice to support in NEST, and there are multiple network slice instances that are associated with this network slice (S-NSSAI), then the total number of terminals supported by all network slice instances of this network slice shall not be more than the maximum number of terminals specified in NEST. It should be noted that a NEST is a GST filled with values.

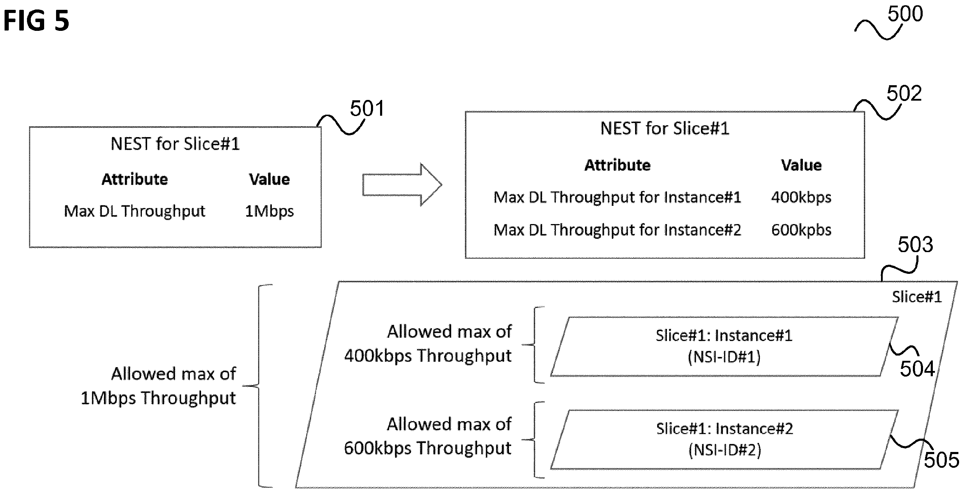

Figure 5 illustrates a NEST 501, 502 for a network slice 503 having a first network slice instance 504 and a second network slice instance 505.

The NEST 501 specifies that the maximum downlink throughput per UE for the network slice 503 is 1Mbps. This maximum downlink throughput may for example be distributed over the two network slice instances 504, 505 such that, for example, the maximum downlink throughput for the first network slice instance 504 is 400kps and the maximum downlink throughput for the second network slice instance 505 is 600kps. The NEST may specify this in detail as illustrated by a second NEST version 502.

While figure 5 relates to a downlink throughput limit, this may analogously applied to an uplink throughput limit.

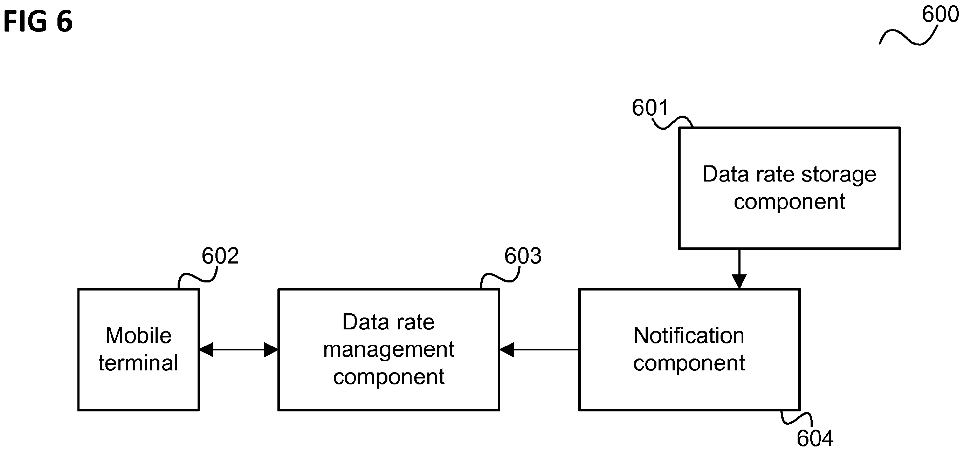

In summary, according to various embodiments, a communication system is provided as illustrated in figure 6.

Figure 6 shows a communication system 600 according to an embodiment.

The communication system 600 includes a data rate quota storage component 601 configured to store, for a mobile terminal 602, a specification of a limit of the total data rate over the communication sessions provided in a network slice for the mobile terminal.

The communication system 600 further includes a data rate management component 603 and a notification component 604 configured to notify the data rate management component 603 about the limit.

The data rate management component 603 is configured to monitor and control the data rate of one or more communication connections of the mobile terminal 602 in the communication system such that the total data rate over the communication sessions provided in the network slice for the mobile terminal does not exceed the limit. Even when the total data rate over the communication sessions provided in the network slice for the mobile terminal has not yet exceeded the limit, the data rate management component 603 may also reject a new PDU Establishment Request sent by the UE for establish a new communication session within the network slice in addition to the existing communication session(s) already established priori, e.g., if the data rate management component would know that the total data over the communication sessions including both the existing ones and the new one would result in exceeding the limit.

According to various embodiments, in other words, an information about a maximum data rate (also referred to as throughput) per network slice per mobile terminal, i.e. a data rate limit per network slice per mobile terminal (which may be specific for the mobile terminal, e.g. may be subscription-dependent) is communicated by the notification component 604 to a component which enforces the limit, i.e. ensures that the limit is not exceed (for the mobile terminal for the network slice).

This maximum data rate may refer to the uplink data rate, the downlink data rate, each of uplink and downlink data rate (i.e. the limit may be a limit pair including a limit for the downlink data rate and a limit for the uplink data rate) or the sum of uplink data rate and downlink data rate.

The component which enforces the limit may be a component of the RAN. For example, the component may be a component of the MAC (Medium Access Control) layer which performs packet scheduling for connections between the communication network and the mobile such that the resulting data rate does not exceed the limit. Alternatively, the component which enforces the limit may be a network function within the mobile core network such as the AMF or the SMF or the PCF, or the NWDAF or even a network component in the OAM, which may have an information of what is the current total data rate over the communication sessions provided in the network slice for the mobile terminal, which is not yet exceeded the limit. Later on, if a UE sends a request for establishing a new PDU Session which may require a certain data rate to be served, and would then result to exceeding the limit, in this case, the network function in the mobile core network rejects the new PDU Establishment Request sent by the UE. Otherwise, if still under the rate limit, the network function in the mobile core network accepts the new PDU Establishment Request.

The component which monitors the current total data rate over the communication sessions provided in the network slice for the mobile terminal may be a component of the RAN or a network function within the mobile core network such as the UPF. The current data rate of the communication sessions, which are then used to calculate the total data rate over all communication sessions provided in the network slice for the mobile terminal, may be an average data rate from a certain period of time, or an instant data rate. These one or more monitoring components may then further provide such data rate information of a communication session to another network function within the mobile core network such as the SMF, PCF or NWDAF, which ask for getting such data rate information either on a subscription basis (e.g., via a Subscribe/Notify method) or on an on-demand basis (e.g., Request/Response). The OAM may also collect such data rate information from these one or more monitoring components.

The communication system may include one or more communication networks and the one or more communication connections may be communication connections between the mobile terminal and one (or more) of the communication networks.

The approach of figure 6 allows performing rate/throughput limitation per network slice per UE in a 5GS including roaming scenario. For example, an operator may enforce a rate/throughput limitation (which may include a maximum downlink and/or a uplink data rate) per network slice per UE, e.g. in a 5G communication system (5GS).

Besides a roaming scenario, the approach of figure 6 may also be applied in a scenario with a PNI-NPN (Public Network Integrated - Non-Public Network), where some 5GC network functions may be managed by a PNI-NPN, and some 5GC network functions are provided by a PLMN.

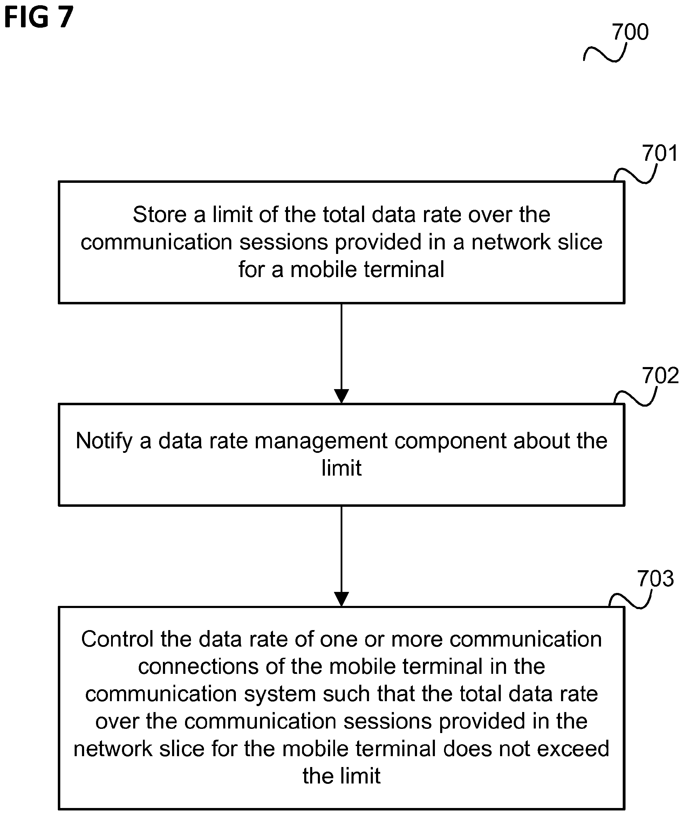

The communication system 600 for example carries out a method as illustrated in figure 7.

Figure 7 shows a flow diagram 700 illustrating a method for operating a communication system.

In 701, a specification of a limit of the total data rate over the communication sessions provided in a network slice for a mobile terminal is stored.

In 702, a data rate management component is notified about the limit.

In 703, the data rate management component controls the data rate of one or more communication connections of the mobile terminal in the communication system such that the total data rate over the communication sessions provided in the network slice for the mobile terminal does not exceed the limit.

The components of the communication system (e.g. the data rate storage component, the notification component and the data rate management component) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

According to another example, a communication network arrangement is provided including one or more network slices of a communication network, a UE subscription data component configured to specify the maximum rate/throughput in a network slice per UE and a management component supported in a network slice configured to retrieve, from the UE subscription data component, the maximum rate/throughput in the network slice and to ensure that such limit is kept within the network slice for the UE.

The management component may include a network function in the core network, e.g., AMF, SMF or PCF.

The management component may include a function in the radio access network (RAN).

The information related to the maximum rate/throughput in a network slice per UE may also be shared across PLMNs for roaming support. In such a case the authorized maximum rate/throughput may be different from the subscribed one depending on the policy of the serving network (V-PLMN), as the serving network is the one which decides what to enforce for a roaming UE.

While specific aspects have been described, it should be understood by those skilled in the art that various changes in form and detail may be made therein without departing from the scope of the aspects of this disclosure as defined by the appended claims. The scope is thus indicated by the appended claims.

## Claims

1. A communication system (100) comprising:
a first communication network acting as home communication network of a mobile terminal (102, 200, 301, 401, 602);
a second communication network acting as visited communication network of the mobile terminal;
a data rate quota storage component (601) configured to store, for a network slice (106, 107, 201, 202, 203) and
for the mobile terminal (102, 200, 301, 401, 602), a specification of a limit of the total data rate over all communication sessions provided in said network slice for said mobile terminal;
a data rate management component (603); and
a notification component (604) configured to notify the data rate management component about the limit,
wherein the data rate management component (603) is configured to monitor and control the data rate of one or
more communication connections of said mobile terminal in the communication system such that the total data rate over all communication sessions provided in the network slice for the mobile terminal does not exceed the limit; and
wherein the data rate quota storage component (601) is a part of the first communication network, the notification component (604) is a part of the first communication network and/or a part of the second communication network, and the data rate management component (603) is part of the second communication network.

2. The communication system (100) of claim 1, wherein the notification component (604) is configured to notify the data rate management component (603) during a registration procedure for registering the mobile terminal (102, 200, 301, 401, 602) in the communication system.

3. The communication system (100) of claim 1 or 2, wherein the notification component (604) is configured to notify the data rate management component (603) during a registration procedure for registering the mobile terminal (102, 200, 301, 401, 602) in the network slice (106, 107, 201, 202, 203).

4. The communication system (100) of any one of claims 1 to 3, wherein the notification component (604) is configured to notify the data rate management component (603) during a session establishment procedure for establishing a communication session for the mobile terminal (102, 200, 301, 401, 602) in the network slice (106, 107, 201, 202, 203) .

5. The communication system (100) of any one of claims 1 to 4, wherein the data rate management component (603) is a radio access network component (103, 302, 402) of a communication network of the communication system.

6. The communication system (100) of any one of claims 1 to 5, wherein the data rate management component (603) is a core network component of a communication network of the communication system, in particular an Access and Mobility management function (101, 303, 403), a Session Management Function (110, 112, 304, 404), a Policy Control Function (115, 306, 406), a User Plane Function (111, 113) or a Network Data Analytics Function (117).

7. The communication system (100) of any one of claims 1 to 6, wherein the notification component (604) is an Access and Mobility Management Function (101, 303, 403), a Session Management Function (110, 112, 304, 404), a Policy Control Function (115, 306, 406), or a Network Data Analytics Function (117).

8. The communication system (100) of any one of claims 1 to 7, wherein the limit is a limit of the total data rate over all communication sessions provided in the network slice for the mobile terminal over the core network instances of the network slice.

9. The communication system (100) of any one of claims 1 to 8, wherein the data rate is an average data rate over a certain period of time or an instant data rate.

10. The communication system (100) of any one of claims 1 to 9, wherein the limit comprises a limit of the total downlink data rate over the communication sessions provided in the network slice (106, 107, 201, 202, 203) for the mobile terminal (102, 200, 301, 401, 602) and/or a limit of the total uplink data rate over the communication sessions provided in the network slice for the mobile terminal.

11. The communication system (100) of any one of claims 1 to 10, wherein the communication system comprises a plurality of network slices (106, 107, 201, 202, 203) and wherein the data rate management component (603) is further configured to monitor and control the data rate of one or more communication connections of the mobile terminal (102, 200, 301, 401, 602) in the communication system such that
the total data rate over the communication sessions provided for the mobile terminal over the network slices does not exceed a first further limit and/or the data rate of each session provided for the mobile terminal does not exceed a respective second further limit.

12. The communication system (100) of any one of claims 1 to 11, wherein the data rate management component (603) is configured to check, for a communication session establishment request by the mobile terminal (102, 200, 301, 401, 602), whether establishing a communication session would exceed the limit and to reject the communication session establishment request if establishing the session would exceed the limit.

13. The communication system (100) of any one of claims 1 to 12, wherein the data rate storage component (601) is implemented by an Operation, Administration and Maintenance entity (116) or by a memory of the data rate management component (603) configured to store the specification of the limit as part of a local configuration or network operator policy.

14. A method for operating a communication system (100) comprising:
storing (701), for a network slice (106, 107, 201, 202, 203) and for a mobile terminal (102, 200, 301, 401, 602), a specification of a limit of the total data rate over all communication sessions provided in said network slice for said mobile terminal;
notifying (702) a data rate management component (603) about the limit; and
the data rate management component (603) monitoring and controlling (703) the data rate of one or more communication connections of the mobile terminal in the communication system such that the total data rate over all communication sessions provided in said network slice for said mobile terminal does not exceed the limit;
wherein the communication system (100) comprises a first communication network acting as home communication network of the mobile terminal and a second communication network acting as visited communication network of the mobile terminal, and wherein the storing is performed by a part of the first communication network, the notifying is performed by a part of the first communication network and/or a part of the second communication network, and the data rate management component (603) is part of the second communication network.

## Patentansprüche

1. Ein Kommunikationssystem (100), aufweisend:
ein erstes Kommunikationsnetz, das als Heimat-Kommunikationsnetz eines mobilen Endgeräts (102, 200, 301, 401, 602) agiert;
ein zweites Kommunikationsnetz, das als besuchtes Kommunikationsnetz des mobilen Endgeräts agiert;
eine Datenratenquotenspeicherkomponente (601), die eingerichtet ist, um für eine Netzpartition (106, 107, 201, 202, 203) und für das mobile Endgerät (102, 200, 301, 401, 602) eine Spezifikation eines Grenzwerts der Gesamtdatenrate über alle Kommunikationssitzungen zu speichern, die in der Netzpartition für das mobile Endgerät bereitgestellt werden;
eine Datenratenverwaltungskomponente (603); und
eine Benachrichtigungskomponente (604), eingerichtet zum Benachrichtigen der Datenratenverwaltungskomponente über den Grenzwert,
wobei die Datenratenverwaltungskomponente (603) eingerichtet ist, um die Datenrate einer oder mehrerer Kommunikationsverbindungen des mobilen Endgeräts in dem Kommunikationssystem zu überwachen und zu steuern, so dass die Gesamtdatenrate über alle Kommunikationssitzungen, die in der Netzpartition für das mobile Endgerät bereitgestellt werden, den Grenzwert nicht überschreitet; und
wobei die Datenratenquotenspeicherkomponente (601) ein Teil des ersten Kommunikationsnetzes ist, die Benachrichtigungskomponente (604) ein Teil des ersten Kommunikationsnetzes und/oder ein Teil des zweiten Kommunikationsnetzes ist, und die Datenratenverwaltungskomponente (603) ein Teil des zweiten Kommunikationsnetzes ist.

2. Das Kommunikationssystem (100) nach Anspruch 1, wobei die Benachrichtigungskomponente (604) eingerichtet ist, um die Datenratenverwaltungskomponente (603) während einer Registrierungsprozedur zum Registrieren des mobilen Endgeräts (102, 200, 301, 401, 602) in dem Kommunikationssystem zu benachrichtigen.

3. Das Kommunikationssystem (100) nach Anspruch 1 oder 2, wobei die Benachrichtigungskomponente (604) eingerichtet ist, um die Datenratenverwaltungskomponente (603) während einer Registrierungsprozedur zum Registrieren des mobilen Endgeräts (102, 200, 301, 401, 602) in der Netzpartition (106, 107, 201, 202, 203) zu benachrichtigen.

4. Das Kommunikationssystem (100) nach irgendeinem der Ansprüche 1 bis 3, wobei die Benachrichtigungskomponente (604) eingerichtet ist, um die Datenratenverwaltungskomponente (603) während einer Sitzungsaufbauprozedur zum Aufbau einer Kommunikationssitzung für das mobile Endgerät (102, 200, 301, 401, 602) in der Netzpartition (106, 107, 201, 202, 203) zu benachrichtigen.

5. Das Kommunikationssystem (100) nach irgendeinem der Ansprüche 1 bis 4, wobei die Datenratenverwaltungskomponente (603) eine Funkzugangsnetzkomponente (103, 302, 402) eines Kommunikationsnetzes des Kommunikationssystems ist.

6. Das Kommunikationssystem (100) nach irgendeinem der Ansprüche 1 bis 5, wobei die Datenratenverwaltungskomponente (603) eine Kernnetzkomponente eines Kommunikationsnetzes des Kommunikationssystems ist, insbesondere eine Zugangs- und Mobilitätsverwaltungsfunktion (101, 303, 403), eine Sitzungsverwaltungsfunktion (110, 112, 304, 404), eine Richtliniensteuerungsfunktion (115, 306, 406), eine Benutzerebenenfunktion (111, 113) oder eine Netzdatenanalysefunktion (117).

7. Das Kommunikationssystem (100) nach irgendeinem der Ansprüche 1 bis 6, wobei die Benachrichtigungskomponente (604) eine Zugangs- und Mobilitätsverwaltungsfunktion (101, 303, 403), eine Sitzungsverwaltungsfunktion (110, 112, 304, 404), eine Richtliniensteuerungsfunktion (115, 306, 406) oder eine Netzdatenanalysefunktion (117) ist.

8. Das Kommunikationssystem (100) nach irgendeinem der Ansprüche 1 bis 7, wobei der Grenzwert ein Grenzwert der Gesamtdatenrate über alle Kommunikationssitzungen ist, die in der Netzpartition für das mobile Endgerät über die Kernnetzinstanzen der Netzpartition bereitgestellt werden.

9. Das Kommunikationssystem (100) nach irgendeinem der Ansprüche 1 bis 8, wobei die Datenrate eine durchschnittliche Datenrate über einen bestimmten Zeitraum oder eine augenblickliche Datenrate ist.

10. Das Kommunikationssystem (100) nach irgendeinem der Ansprüche 1 bis 9, wobei der Grenzwert einen Grenzwert der gesamten Downlink-Datenrate über die in der Netzpartition (106, 107, 201, 202, 203) für das mobile Endgerät (102, 200, 301, 401, 602) bereitgestellten Kommunikationssitzungen und/oder ein Grenzwert der gesamten Uplink-Datenrate über die in der Netzpartition für das mobile Endgerät bereitgestellten Kommunikationssitzungen aufweist.

11. Das Kommunikationssystem (100) nach irgendeinem der Ansprüche 1 bis 10, wobei das Kommunikationssystem eine Mehrzahl von Netzpartitionen (106, 107, 201, 202, 203) aufweist und wobei die Datenratenverwaltungskomponente (603) ferner eingerichtet ist, um die Datenrate einer oder mehrerer Kommunikationsverbindungen des mobilen Endgeräts (102, 200, 301, 401, 602) in dem Kommunikationssystem zu überwachen und zu steuern, so dass
die Gesamtdatenrate über die für das mobile Endgerät über die Netzpartitionen bereitgestellten Kommunikationssitzungen einen ersten weiteren Grenzwert nicht überschreitet und/oder
die Datenrate jeder für das mobile Endgerät bereitgestellten Sitzung einen jeweiligen zweiten weiteren Grenzwert nicht überschreitet.

12. Das Kommunikationssystem (100) nach irgendeinem der Ansprüche 1 bis 11, wobei die Datenratenverwaltungskomponente (603) eingerichtet ist, um für eine Anforderung zum Aufbau einer Kommunikationssitzung durch das mobile Endgerät (102, 200, 301, 401, 602) zu prüfen, ob der Aufbau einer Kommunikationssitzung den Grenzwert überschreiten würde, und um die Anforderung zum Aufbau einer Kommunikationssitzung zurückzuweisen, wenn der Aufbau der Sitzung den Grenzwert überschreiten würde.

13. Das Kommunikationssystem (100) nach irgendeinem der Ansprüche 1 bis 12, wobei die Datenraten-Speicherkomponente (601) durch eine Betriebs-, Verwaltungs- und Wartungseinheit (116) oder durch einen Speicher der Datenraten-Verwaltungskomponente (603) implementiert wird, der dazu eingerichtet ist, die Spezifikation des Limits als Teil einer lokalen Konfiguration oder Netzbetreiberrichtlinie zu speichern.

14. Ein Verfahren zum Betreiben eines Kommunikationssystems (100), aufweisend:
Speichern (701), für eine Netzpartition (106, 107, 201, 202, 203) und für ein mobiles Endgerät (102, 200, 301, 401, 602), einer Spezifikation eines Grenzwerts der Gesamtdatenrate über alle in der Netzpartition für das mobile Endgerät bereitgestellten Kommunikationssitzungen;
Benachrichtigen (702) einer Datenratenverwaltungskomponente (603) über den Grenzwert; und
dass die Datenratenverwaltungskomponente (603) die Datenrate einer oder mehrerer Kommunikationsverbindungen des mobilen Endgeräts in dem Kommunikationssystem überwacht und steuert (703), so dass die Gesamtdatenrate über alle in der Netzpartition für das mobile Endgerät bereitgestellten Kommunikationssitzungen den Grenzwert nicht überschreitet;
wobei das Kommunikationssystem (100) ein erstes Kommunikationsnetz, das als Heimat-Kommunikationsnetz des mobilen Endgeräts agiert, und ein zweites Kommunikationsnetz,
das als besuchtes Kommunikationsnetz des mobilen Endgeräts agiert, aufweist, und wobei das Speichern durch einen Teil des ersten Kommunikationsnetzes durchgeführt wird, das Benachrichtigen durch einen Teil des ersten Kommunikationsnetzes und/oder einen Teil des zweiten Kommunikationsnetzes durchgeführt wird, und die Datenraten-Verwaltungskomponente (603) Teil des zweiten Kommunikationsnetzes ist.

## Revendications

1. Système de communication (100) comprenant :
un premier réseau de communication agissant comme réseau de communication domestique d'un terminal mobile (102, 200, 301, 401, 602) ;
un second réseau de communication agissant comme réseau de communication visité du terminal mobile ;
un composant de stockage de quota de débit de données (601) configuré pour stocker, pour une tranche de réseau (106, 107, 201, 202, 203) et pour le terminal mobile (102, 200, 301, 401, 602), une spécification d'une limite du débit de données total sur toutes les sessions de communication fournies dans ladite tranche de réseau pour ledit terminal mobile ;
un composant de gestion du débit de données (603) ; et
un composant de notification (604) configuré pour notifier la limite au composant de gestion de débit de données, dans lequel le composant de gestion de débit de données (603) est configuré pour surveiller et contrôler le débit de données d'une ou
plusieurs connexions de communication dudit terminal mobile dans le système de communication de sorte que le débit de données total sur toutes les sessions de communication fournies dans la tranche de réseau pour le terminal mobile ne dépasse pas la limite ; et dans lequel le composant de stockage de quota de débit de données (601) est une partie du premier réseau de communication, le composant de notification (604) est une partie du premier réseau de communication et/ou une partie du second réseau de communication, et le composant de gestion de débit de données (603) est une partie du second réseau de communication.

2. Système de communication (100) selon la revendication 1, dans lequel le composant de notification (604) est configuré pour notifier le composant de gestion de débit de données (603) pendant une procédure d'enregistrement pour enregistrer le terminal mobile (102, 200, 301, 401, 602) dans le système de communication.

3. Système de communication (100) selon la revendication 1 ou 2, dans lequel le composant de notification (604) est configuré pour notifier le composant de gestion de débit de données (603) pendant une procédure d'enregistrement pour enregistrer le terminal mobile (102, 200, 301, 401, 602) dans la tranche de réseau (106, 107, 201, 202, 203).

4. Système de communication (100) selon l'une quelconque des revendications 1 à 3, dans lequel le composant de notification (604) est configuré pour notifier le composant de gestion de débit de données (603) pendant une procédure d'établissement de session pour établir une session de communication pour le terminal mobile (102, 200, 301, 401, 602) dans la tranche de réseau (106, 107, 201, 202, 203).

5. Système de communication (100) selon l'une quelconque des revendications 1 à 4, dans lequel le composant de gestion de débit de données (603) est un composant de réseau d'accès radio (103, 302, 402) d'un réseau de communication du système de communication.

6. Système de communication (100) selon l'une quelconque des revendications 1 à 5, dans lequel le composant de gestion de débit de données (603) est un composant de réseau central d'un réseau de communication du système de communication, en particulier une fonction de gestion d'accès et de mobilité (101, 303, 403), une fonction de gestion de session (110, 112, 304, 404), une fonction de contrôle de politique (115, 306, 406), une fonction de plan utilisateur (111, 113) ou une fonction d'analyse de données de réseau (117).

7. Système de communication (100) selon l'une quelconque des revendications 1 à 6, dans lequel le composant de notification (604) est une fonction de gestion d'accès et de mobilité (101, 303, 403), une fonction de gestion de session (110, 112, 304, 404), une fonction de contrôle de politique (115, 306, 406), ou une fonction d'analyse de données de réseau (117).

8. Système de communication (100) selon l'une quelconque des revendications 1 à 7, dans lequel la limite est une limite du débit de données total sur toutes les sessions de communication fournies dans la tranche de réseau pour le terminal mobile sur les instances de réseau central de la tranche de réseau.

9. Système de communication (100) selon l'une quelconque des revendications 1 à 8, dans lequel le débit de données est un débit de données moyen sur une certaine période de temps ou un débit de données instantané.

10. Système de communication (100) selon l'une quelconque des revendications 1 à 9, dans lequel la limite comprend une limite du débit total de données de liaison descendante sur les sessions de communication prévues dans la tranche de réseau (106, 107, 201, 202, 203) pour le terminal mobile (102, 200, 301, 401, 602) et/ou une limite du débit total de données de liaison montante sur les sessions de communication prévues dans la tranche de réseau pour le terminal mobile.

11. Système de communication (100) selon l'une quelconque des revendications 1 à 10, dans lequel le système de communication comprend une pluralité de tranches de réseau (106, 107, 201, 202, 203) et dans lequel le composant de gestion de débit de données (603) est en outre configuré pour surveiller et contrôler le débit de données d'une ou plusieurs connexions de communication du terminal mobile (102, 200, 301, 401, 602) dans le système de communication de sorte que
le débit total de données sur les sessions de communication fournies au terminal mobile sur les tranches de réseau ne dépasse pas une première limite supplémentaire et/ou
le débit de données de chaque session prévue pour le terminal mobile ne dépasse pas une seconde limite supplémentaire respective.

12. Système de communication (100) selon l'une quelconque des revendications 1 à 11, dans lequel le composant de gestion de débit de données (603) est configuré pour vérifier, pour une demande d'établissement de session de communication par le terminal mobile (102, 200, 301, 401, 602), si l'établissement d'une session de communication devrait dépasser la limite et pour rejeter la demande d'établissement de session de communication si l'établissement de la session dépasse la limite.

13. Système de communication (100) selon l'une quelconque des revendications 1 à 12, dans lequel le composant de stockage de débit de données (601) est mis en oeuvre par une entité d'exploitation, d'administration et de maintenance (116) ou par une mémoire du composant de gestion de débit de données (603) configurée pour stocker la spécification de la limite en tant que partie d'une configuration locale ou d'une politique d'opérateur de réseau.

14. Procédé de fonctionnement d'un système de communication (100), comprenant :
stocker (701), pour une tranche de réseau (106, 107, 201, 202, 203) et pour un terminal mobile (102, 200, 301, 401, 602), une spécification d'une limite du débit de données total sur toutes les sessions de communication fournies dans ladite tranche de réseau pour ledit terminal mobile ;
notifier (702) à un composant de gestion de débit de données (603) la limite ; et
le composant de gestion de débit de données (603) surveillant et contrôlant (703) le débit de données d'une ou plusieurs connexions de communication du terminal mobile dans le système de communication de sorte que le débit de données total sur toutes les sessions de communication fournies dans ladite tranche de réseau pour ledit terminal mobile ne dépasse pas la limite ;
dans lequel le système de communication (100) comprend un premier réseau de communication agissant en tant que réseau de communication domestique du terminal mobile et un second réseau de communication agissant en tant que réseau de communication visité du terminal mobile, et dans lequel le stockage est effectué par une partie du premier réseau de communication, la notification est effectuée par une partie du premier réseau de communication et/ou une partie du second réseau de communication, et le composant de gestion de débit de données (603) fait partie du second réseau de communication.
